# EUROPEAN PATENT SPECIFICATION

(11) **EP 2 896 676 B1**
(45) Date of publication and mention of the grant of the patent: **02.11.2016**
(21) Application number: 12884505.4
(22) Date of filing: 11.09.2012
(51) Int. Cl.: C09K 11/87, C09K 11/77, C09K 11/02

(54) **TITANATE LUMINESCENT MATERIAL AND PREPARATION METHOD THEREOF**
LUMINESZENTES TITANATMATERIAL UND HERSTELLUNGSVERFAHREN DAFÜR
MATÉRIAU LUMINESCENT TITANATE ET SON PROCÉDÉ DE PRÉPARATION

(43) Date of publication of application: 22.07.2015
(73) Proprietor: Ocean's King Lighting Science&Technology Co., Ltd., Guangdong 518054 (CN); Shenzhen Ocean's King Lighting Engineering Co. Ltd., Guangdong 518054 (CN)
(72) Inventor: ZHOU, Mingjie, Shenzhen Guangdong 518054 (CN); WANG, Rong, Shenzhen Guangdong 518054 (CN)
(74) Representative: Michalski Hüttermann & Partner Patentanwälte mbB
(86) International application number: PCT/CN2012/081235
(87) International publication number: WO 2014/040218

(56) References cited:
- WO-A1-2011/120227
- CN-A- 102 408 892
- CN-A- 102 477 294
- DATABASE WPI Week 201273 30 May 2012 (2012-05-30) Thomson Scientific, London, GB; AN 2012-G99143 XP002755267, -& CN 102 477 294 A (HAIYANGWANG LIGHTING TECHNOLOGY CO LTD) 30 May 2012 (2012-05-30)
- ISABEL PASTORIZA-SANTOS ET AL: "One-Pot Synthesis of Ag@TiO 2 Core-Shell Nanoparticles and Their Layer-by-Layer Assembly", LANGMUIR, vol. 16, no. 6, 1 March 2000 (2000-03-01), pages 2731-2735, XP055256666, NEW YORK, NY; US ISSN: 0743-7463, DOI: 10.1021/la991212g
- Xiaoming Liu ET AL: "Monodisperse spherical core-shell structured Si O 2 - Ca Ti O 3 : Pr 3 + phosphors for field emission displays Monodisperse spherical core-shell structured SiO 2 - CaTiO 3 : Pr 3+ phosphors for field emission displays", Journal of Applied Physics Sci. Technol. A, 1 January 2006 (2006-01-01), pages 124902-2472, XP055223887, Retrieved from the Internet: URL:http://scitation.aip.org/docserver/ful ltext/aip/journal/jap/99/12/1.2204751.pdf? expires=1445957371&id=id&accname=2101563&c hecksum=AD0BD1EBA2A639122F42989D11C03B83
- DATABASE WPI Week 201316 11 April 2012 (2012-04-11) Thomson Scientific, London, GB; AN 2012-E63597 XP002755268, -& CN 102 408 892 A (HAIYANGWANG LIGHTING TECHNOLOGY CO LTD) 11 April 2012 (2012-04-11)

## Description

### FIELD OF THE INVENTION

The present disclosure relates to the field of luminescent materials, and more particularly relates to a titanate luminescent material and preparation method thereof.

### BACKGROUND OF THE INVENTION

Red phosphors include several material categories such as sulfides, oxides, sulfur oxides and titanates. Among them, the titanate material has many advantages such as high stability, good color rendering properties, or the like, such that it can be applied to situations demanding a high working stability of phosphor, e.g., field emission display used under a low voltage and high current density. As a typical titanate material, CaTiO₃:Pr has a CIE chromaticity coordinates of x=0.680 and y=0.311, which is very close to ideal red, thus it is an ideal phosphor.

However, the conventional titanate materials usually have structural defects, for example, in the CaTiO₃:Pr material, since Ca²⁺ ions at A position in the Perovskite structure is replaced by luminescence center Pr³⁺ ion, Ca²⁺ ions vacancies defects and oxygen vacancies defects may be easily formed, which leads to an increasing risk of non-radiative transition and a reducing of luminous efficiency of Pr³⁺ ions. Therefore, the CaTiO₃:Pr materials exist the problem of the low luminous efficiency, which limits the practical application of the CaTiO₃:Pr materials.

CaTiO₃:Pr materials are described in for example CN102477294 and CN102408892.

### SUMMARY OF THE INVENTION

Accordingly, it is necessary to provide a titanate luminescent material having a higher luminous efficiency.

A titanate luminescent material has the following chemical formula:

Ca₁₋ₓTi_{1-y}O₃:Prₓ,R_{y}@TiO₂CM_{z};

wherein @ represents coating, Pr and R are doped in Ca₁₋ₓTi_{1-y}O₃, M forms a core of the titanate luminescent material, TiO₂ forms an intermediate shell of the titanate luminescent material; Ca₁₋ₓTi_{1-y}O₃:Prₓ,R_{y}, forms an outer shell of the titanate luminescent material; R is at least one selected from the group consisting of Al and Ga, and M is at least one metallic nanoparticle selected from the group consisting of Ag, Au, Pt, Pd and Cu; 0<x≤0.01, 0<y≤0.20, z is a molar ratio between M and Ti in the titanate luminescent material, O<z≤1×10⁻².

In one embodiment, 0.001≤x≤0.005.

In one embodiment, 0.02≤y≤0.15.

In one embodiment, 1×10⁻⁵≤y≤5×10⁻³.

In the titanate luminescent material, a charge compensation Al³+ or Ga³⁺ is doped to replace Ti⁴⁺ ion at B position, such that the structural defect of the titanate luminescent material is effectively solved, and the probability of non-radiative transition is reduced, thus enhancing the luminous efficiency. In addition, by coating metal nanopaticles to form a core-shell structure, the titanate luminescent material exhibits a greatly increased luminous efficiency without changing the wavelength of the emitted light under the same excitation conditions due to the surface plasma effect of metal nanoparticles. The titanate luminescent material described above exhibits many advantages such as high luminous efficiency, good stability, high light performance, such that it has broad practical application prospects.

Additionally, it is necessary to provide a method of preparing the titanate luminescent material having a higher luminous efficiency.

A method of preparing a titanate luminescent material includes the following steps:
mixing and reacting a salt solution of the metal M, an organic titanium compound, and a first reducing agent to obtain a colloid of TiO_{2@}M_{z} having a core-shell structure, wherein the salt solution of the metal M and the organic titanium compound are mixed according to a mole ratio z of M to titanium, 0<z≤1×10⁻², M is at least one selected from the group consisting of Ag, Au, Pt, Pd and Cu, @ represents coating, M forms a core of the core-shell structure, TiO₂ forms an intermediate shell of the core-shell structure;
preparing an ethanol aqueous solution containing Ca²⁺, R³⁺, and Pr³⁺ according to mole ratio of Ca²⁺, R³⁺, and Pr³⁺ of (1-x):x:y; wherein R³⁺ is at least one selected from the group consisting of Al³⁺ and Ga³⁺, 0<x≤0.01; 0<y≤0.20;
adding a second reducing agent and a surfactant to the ethanol aqueous solution containing Ca²⁺, R³⁺, and Pr³⁺, stirring at 60°C to 80°C for 2 to 6 hours to obtain a sol;
adding the TiO₂@M_{z} solid to the sol, stirring at 60°C to 80°C for 2 to 12 hours to obtain a precursor solution, wherein a mole ratio of the TiO₂@M_{z} to Ca²⁺ in the sol is (2-y):(1-x);
drying the precursor solution to obtain a gel; and
grinding the gel, preheating the gel at 500°C to 700°C for 1 to 6 hours, grinding the gel again after cooling, calcining the gel at 700°C to 1200°C for 1 to 10 hours to obtain a titanate luminescent material having the following chemical formula: Ca₁₋ₓTi_{1-y}O₃:Prₓ,R_{y}@TiO₂@M_{z}; wherein Pr and R are doped in Ca₁₋ₓTi_{1-y}O₃, M forms a core of the titanate luminescent material, TiO₂ forms an intermediate shell of the titanate luminescent material; Ca₁₋ₓTi_{1-y}O₃:Prₓ,R_{y}, forms an outer shell of the titanate luminescent material.

In one embodiment, the salt solution of the metal M is at least one solution selected from the group consisting of HAuCl₄, AgNO₃, H₂PtCl₆, PdCl₂, and Cu(NO₃)₂ having a concentration of 5×10⁻⁵mol/L to 5 × 10⁻³mol/L.

In one embodiment, the organic titanium compound is titanium isopropoxide triethanolamine; the first reducing agent is dimethyl formamide, the first reducing agent is 20% to 80% by volume of a total volume of the first reducing agent, the salt solution of the metal M, and the organic titanium compound.

In one embodiment, the ethanol aqueous solution containing Ca²⁺, R³⁺, and Pr³⁺ is an ethanol aqueous solution containing acetate, hydrochloride or nitrate or Ca²⁺, R³⁺, and Pr³⁺, and a volume ratio of ethanol to water in the ethanol aqueous solution ranges from 3:1 to 8:1.

In one embodiment, the surfactant is a polyethylene glycol having a molecular weight of 100 to 20000.

In the method of preparing the titanate luminescent material, the M metal ion in the salt solution of the metal M is firstly reduced to M elemental metal in the presence of a reducing agent, then the M elemental metal is used as a core, the organic titanium compound hydrolyzes slowly on the surface of the elemental metal to form a TiO₂ shell to encapsulate metal M, thus obtaining TiO₂@M. Finally, a sol-gel method is performed using TiO₂@M as a Ti source compound with the compounds corresponding to Ca, R, and Pr to prepare the titanate luminescent material coating metal nanoparticles, i.e., Ca₁₋ₓTi_{1-y}O₃:Prₓ,Ry@TiO₂@M_{z}. The above preparation method is simple, low requirement on equipment, pollution-free, easy to control, and is suitable for industrial production. The obtained titanate luminescent material has a core-shell structure, and exhibits a high luminous efficiency, such that it has broad practical application prospects.

### BRIEF DESCRIPTION OF THE DRAWINGS

FIG. 1 is a flow chat of a method of preparing a titanate luminescent material according to an embodiment;
FIG. 2 is a graphical representation of cathodoluminescence spectrum under a voltage of 3kV of the fluorescent material of Ca₀.₉₉₈Ti₀.₉O₃:Pr_{0.002},Al_{0.1}@TiO₂@Ag_{5×10}⁻⁴ coating metal nanopaticle Ag prepared in accordance with Example 2 and the fluorescent material of Ca₀.₉₉₈Ti_{0.9}O₃:Pr₀.₀₀₂,Al_{0.1}@TiO₂ without coating metal nanoparticles.

### DETAILED DESCRIPTION OF THE EMBODIMENTS

Reference will now be made to the drawings to describe, in detail, embodiments of the present titanate luminescent material and preparation method thereof.

According to an embodiment, a titanate luminescent material is provided having the following chemical formula: Ca₁₋ₓTi_{1-y}O₃:Prₓ,R_{y}@CTiO_{2@}M_{z}, where @ represents coating, Pr and R are doped in Ca₁₋ₓTi_{1-y}O₃. M forms a core of the titanate luminescent material, TiO₂ forms an intermediate shell of the titanate luminescent material; Ca₁₋ₓTi_{1-y}O₃:Prₓ,R_{y}, forms an outer shell of the titanate luminescent material. R is at least one selected from the group consisting of Al and Ga. M is at least one nanoparticle selected from the group consisting of Ag, Au, Pt, Pd and Cu. 0<x≤0.01, preferably 0.001≤x≤0.005. 0<y≤0.20, preferably 0.02≤y≤0.15. z is a molar ratio between M and Ti in the titanate luminescent material, 0<z≤1×10⁻², preferably 1×10⁻⁵≤y≤5×10⁻³

In the titanate luminescent material, the charge compensation Al³⁺ or Ga³⁺ is doped to replace Ti⁴⁺ ion at B position, such that the structural defect of the titanate luminescent material is effectively solved, and the probability of non-radiative transition is reduced, thus enhancing the luminous efficiency. In addition, by encapsulating metal nanopaticles to form a core-shell structure, the titanate luminescent material exhibits a greatly increased luminous efficiency without changing the wavelength of the emitted light under the same excitation conditions due to the surface plasma effect of metal nanoparticles. The titanate luminescent material described above exhibits many advantages such as high luminous efficiency, good stability, high light performance, such that it has broad practical application prospects.

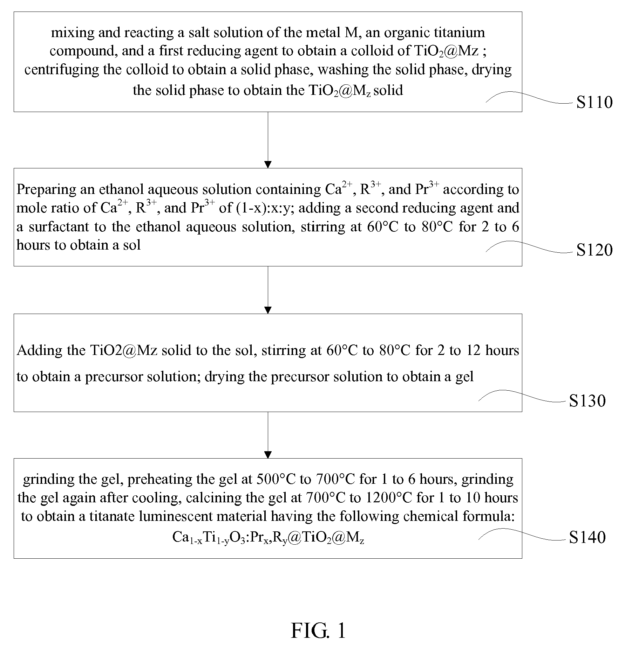

Referring to FIG. 1, an embodiment of a method of preparing the titanate luminescent material is provided, which includes the following steps:
Step S110, a salt solution of the metal M, an organic titanium compound, and a first reducing agent are mixed and reacted to obtain a colloid of TiO₂@M_{z} having a core-shell structure, the colloid is centrifuged to obtain a solid phase, which is then washed, dried to obtain the TiO₂@M_{z} solid. The salt solution of the metal M and the organic titanium compound are mixed according to a mole ratio z, which is a mole ratio of M to titanium, 0<z≤1×10⁻², M is at least one selected from the group consisting of Ag, Au, Pt, Pd and Cu, @ represents coating, M forms a core of the core-shell structure, TiO₂ forms an intermediate shell of the core-shell structure.

In the present embodiment, the salt solution of the metal M is at least one solution selected from the group consisting of HAuCl₄, AgNO₃, H₂PtCl₆, PdCl₂, and Cu(NO₃)₂ having a concentration of 5×10⁻⁵mol/L to 5×10⁻³mol/L. Specifically, at least one of the AgNO₃. AuCl_{3·}HCl·4H₂O, H₂PtCl_{6·}6H₂O, PdCl_{2·}2H₂O, Cu(NO₃)₂ can be added to deionized water or ethanol, uniformly stirred, and the metal M salt solution can be obtained.

In the present embodiment, the organic titanium compound is triethanolamine titanium isopropoxide. The first reducing agent is dimethyl formamide (DMF). The adding amount of the first reducing agent, i.e. DMF, is 20% to 80%, preferably 25% to 50% by volume of a total volume of the first reducing agent, the salt solution of the metal M, and the organic titanium compound.

Step S120, an ethanol aqueous solution containing Ca²⁺, R³⁺, and Pr³⁺ is prepared according to mole ratio of Ca²⁺, R³⁺, and Pr³⁺ of (1-x):x:y, a second reducing agent and a surfactant are added to the ethanol aqueous solution containing Ca²⁺, R³⁺, and Pr³⁺, stirred at 60°C to 80°C for 2 to 6 hours to obtain a sol. **R**^{**3**+} is at least one selected from the group consisting of Al³⁺ and Ga³⁺, 0<x≤0.01; 0<y≤0.20.

In the present embodiment, the ethanol aqueous solution containing Ca²⁺, **R**^{**3**+}, and Pr³⁺ is an ethanol aqueous solution containing acetate, hydrochloride or nitrate of Ca²⁺, R³⁺, and Pr³⁺. For example, oxide or carbonate of Ca, R and Pr can be used as a raw material, which is dissolved in hydrochloric acid or nitric acid, and then a mixture of ethanol and water is added to prepare the ethanol aqueous solution. Alternatively, acetate, hydrochloride or nitrate of Ca, R and Pr can be used directly as the raw material, which is dissolved in a mixture of ethanol and water to prepare the ethanol aqueous solution. In the present embodiment, a volume ratio of ethanol to water in the ethanol aqueous solution ranges from 3:1 to 8:1.

In the present embodiment, the second reducing agent is citric acid, and a mole ratio of the second reducing agent to a sum of the Ca²⁺, R³⁺, and Pr³⁺ ranges from 1:1 to 5:1. The surfactant is a polyethylene glycol having a molecular weight of 100 to 20000, preferably 2000 to 10000.

Step S130, the TiO₂@M_{z} solid is added to the sol, stirred at 60°C to 80°C for 2 to 12 hours to obtain a precursor solution. The precursor solution is then dried to obtain a gel. A mole ratio of the adding amount of the TiO₂@M_{z} to Ca²⁺ in the sol is (2-y):(1-x); where 0<x≤0.01; 0<y≤0.20.

Step S140, the gel is ground, preheated at 500°C to 700°C for 1 to 6 hours, ground again after cooling, calcinined at 700°C to 1200°C for 1 to 10 hours to obtain a titanate luminescent material having the following chemical formula: Ca₁₋ₓTi₁₋yO₃:Prₓ,R_{y}@TiO₂@M_{z}; where Pr and R are doped in Ca₁₋ₓTi_{1-y}O₃, M forms a core of the titanate luminescent material, TiO₂ forms an intermediate shell of the titanate luminescent material, and Ca₁₋ₓTi_{1-y}O₃:Prₓ,R_{y}, forms an outer shell of the titanate luminescent material.

In the method of preparing the titanate luminescent material, the M metal ion in the salt solution of the metal M is firstly reduced to M elemental metal in the presence of a reducing agent, then the M elemental metal is used as a core, the organic titanium compound hydrolyzes slowly on the surface of the elemental metal to form a TiO₂ shell to encapsulate metal M, thus obtaining TiO₂@M. Finally, a sol-gel method is performed using TiO₂@M as a Ti source compound with the compounds corresponding to Ca, R, and Pr to prepare the titanate luminescent material coating metal nanoparticles, i.e., Ca₁₋ₓTi_{1-y}O₃:Prₓ,R_{y}@TiO₂@M_{z}. The above preparation method is simple, low requirement on equipment, pollution-free, easy to control, and suitable for industrial production. The obtained titanate luminescent material has a core-shell structure and exhibits a high luminous efficiency, such that it has broad practical application prospects.

The titanate luminescent material with different composition and preparation method, as well as performance test, will be described with reference to specific examples.

### Example 1

Preparation of Ca_{0.999}Ti_{0.98}O₃:Pr_{0.001},Al_{0.02}@TiO₂@Au_{1×}10⁻² using sol-gel method.

Preparation of TiO₂@Au_{1×10}⁻²: 10.3 mg of chloroauric acid (AuCl₃•HCl•4H₂O) was weighed and dissolved into deionized water to prepare 20mL of chloroauric acid solution having a concentration of 5×10⁻³mol/L. 5mL of triethanolamine titanium isopropoxide with a concentration of 4.3 mol/L was pipette and diluted with isopropyl alcohol to 1mol/L. 10mL of 5×10⁻³mol/L of chloroauric acid solution and 5mL of 1mol/L of isopropyl alcohol solution of titanium isopropoxide triethanolamine were pipette and well mixed to form a mixed solution. 15mL of dimethylformamide was added to the mixed solution, stirred at a room temperature for 15 minutes, the heated and stirred at 140 °C using a reflux device. When the color of solution turned light brown through colorless and turned dark brown, the heating was stopped, the system was cooled to the room temperature, and TiO₂@Au_{1×10}-₂ colloid was obtained. The colloid was then centrifuged, rinsed with ethanol and dried, and TiO₂@Au_{1×10}-₂ solid was obtained.

Preparation of titanate luminescent material of Ca_{0.999}Ti_{0.98}O₃:Pr_{0.001},Al₀.₀₂@TiO₂@Au_{1×10}-2: 0.7900g of calcium acetate (Ca(CH₃COO)₂), 0.0204g of aluminum acetate (Al(CH₃COO)₃), and 0.0016g of praseodymium acetate (Pr(CH₃COO)₃) were weighed and placed in a vessel, 50mL of mixed solution of ethanol and water with a volume ratio of 4: 1 was added. 1.9212g of citric acid and 2.5g of polyethylene glycol having a relative molecular weight of 100 were added to the vessel in an 80°C water bath with stirring, the reaction system was stirred for 2 hours to obtain a transparent sol. 0.3914g of TiO₂@Au_{1×10}-₂ powder was added, stirred for 2 hours to obtain a precursor sol. The precursor sol was then dried for 20 hours at a temperature of 70°C, a xerogel was obtained after the solvent is volatized. The obtained xerogel was ground to powder, calcined in a high temperature box furnace at 600°C for 2 hours, cooled and ground again, calcined at 900°C for 4 hours, cooled to the room temperature to obtain the titanate luminescent material having the formula of Ca_{0.999}Ti_{0.98}O₃:Pr_{0.001},Al_{0.02}@TiO₂@Au_{1×10}-2.

### Example 2

Preparation of Ca_{0.998}Ti_{0.9}O₃:Pr_{0.002},Al_{0.1}@TiO₂@Ag_{5×10}-4 using sol-gel method.

Preparation of TiO2@Au_{1×10}-4: 3.4 mg of silver nitrate (AgNO₃) was weighed and dissolved into deionized water to prepare 20mL of silver nitrate solution having a concentration of 1×10⁻³mol/L. 10mL of triethanolamine titanium isopropoxide with a concentration of 4.3 mol/L was pipette and diluted with isopropyl alcohol to 0.22mol/L. 2mL of 1x10⁻³mol/L of silver nitrate solution and 18mL of 1mol/L of isopropyl alcohol solution of titanium isopropoxide triethanolamine were pipette and well mixed to form a mixed solution. 10mL of dimethylformamide was added to the mixed solution, stirred at a room temperature for 15 minutes, the heated and stirred at 140 °C using a reflux device. When the color of solution turned light brown through colorless and turned dark brown, the heating was stopped, the system was cooled to the room temperature, and TiO₂@Au_{5×10}-4 colloid was obtained. The colloid was then centrifuged, rinsed with ethanol and dried, and TiO₂@Au_{5×10}-4 solid was obtained.

Preparation of titanate luminescent material of Ca_{0.998}Ti₀.₉O₃:Pr_{0.002},Al_{0.1}@TiO₂@Ag_{5×10}-4: 1.6375g of calcium nitrate (Ca(NO₃)₂), 0.2129g of aluminum nitrate (Al(NO₃)₃), and 0.0065g of praseodymium nitrate (Pr(NO₃)₃) were weighed and placed in a vessel, 50mL of mixed solution of ethanol and water with a volume ratio of 3: 1 was added. 7.6848g of citric acid and 5g of polyethylene glycol having a relative molecular weight of 10000 were added to the vessel in an 80°C water bath with stirring, the reaction system was stirred for 4 hours to obtain a transparent sol. 0.7189g of TiO2@Au_{5×10}-4 powder was added, stirred for 6 hours to obtain a precursor sol. The precursor sol was then dried for 10 hours at a temperature of 100°C, a xerogel was obtained after the solvent is volatized. The obtained xerogel was ground to powder, calcined in a high temperature box furnace at 700°C for 4 hours, cooled and ground again, calcined at 1000°C for 4 hours, cooled to the room temperature to obtain the titanate luminescent material having the formula of Ca₀.₉₉₈Ti₀.₉O₃: :Pr_{0.002},Al_{0.1}@TiO₂@Ag_{5×10}-4.

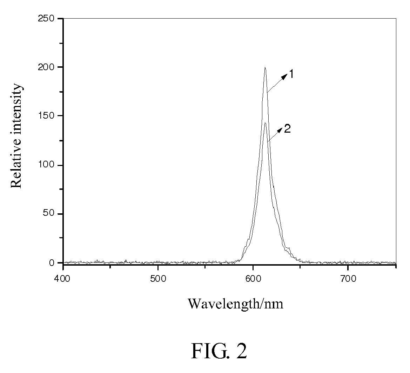

FIG. 2 is a graphical representation of cathodoluminescence spectrum under a voltage of 3kV of the fluorescent material of Ca_{0.998}Ti₀.₉O₃:Pr_{0.002},Al_{0.1}@TiO₂@Ag_{5×10}-4 coating metal nanopaticle Ag prepared in accordance with Example 2 and the fluorescent material of Ca_{0.998}Ti_{0.9}O₃:Pr_{0.002},Al_{0.1}@TiO₂ without coating metal nanoparticles. It can be seen from FIG. 2 that, at an emission peak of 612nm, the emission intensity of luminescent material coating metal nanoparticles is enhanced by 40% comparing to commercial phosphor. Accordingly, the luminescent material according to Example 2 has a good stability, good color purity and high luminous efficiency.

### Example 3

Preparation of Ca_{0.995}Ti_{0.85}O₃:Pr_{0.005},Ga_{0.15}@TiO₂@Pt_{5×10}-3 using sol-gel method.

Preparation of TiO₂@Pt_{5×10}-3: 25.9 mg of chloroplatinic acid (H₂PtCl₆-6H₂O) was weighed and dissolved into deionized water to prepare 10mL of chloroplatinic acid solution having a concentration of 2.5×10⁻³mol/L. 5mL of triethanolamine titanium isopropoxide with a concentration of 4.3 mol/L was pipette and diluted with isopropyl alcohol to 0.5mol/L. 8mL of 2.5×10⁻³mol/L of chloroplatinic acid solution and 16mL of 0.5mol/L of isopropyl alcohol solution of titanium isopropoxide triethanolamine were pipette and well mixed to form a mixed solution. 6mL of dimethylformamide was added to the mixed solution, stirred at a room temperature for 15 minutes, the heated and stirred at 140 °C using a reflux device. When the color of solution turned light brown through colorless and turned dark brown, the heating was stopped, the system was cooled to the room temperature, and TiO₂@Pt_{5×10}-3 colloid was obtained. The colloid was then centrifuged, rinsed with ethanol and dried, and TiO2@Pt_{5×10}-3 solid was obtained.

Preparation of titanate luminescent material of Ca_{0.995}Ti₀.₈₅O₃:Pr_{0.005},Ga_{0.15}@TiO₂@Pt_{5×10}-3: 0.2789g of calcium oxide (CaO), 0.0703g of gallium oxide (Ga₂O₃), and 0.0043g of praseodymium oxide (Pr₆O₁₁) were weighed and placed in a vessel, 1mL of concentrated nitric acid and 3mL of deionized water were dissolved by heating in the vessel, and 50mL of mixed solution of ethanol and water with a volume ratio of 3: 1 was added after cooling. 9.6060g of citric acid and 2.75g of polyethylene glycol having a relative molecular weight of 200 were added to the vessel in an 80°C water bath with stirring, the reaction system was stirred for 1 hour to obtain a transparent sol. 0.3395g of TiO₂@Pt_{5×10}-3 powder was added, stirred for 12 hours to obtain a precursor sol. The precursor sol was then dried for 6 hours at a temperature of 150°C, a xerogel was obtained after the solvent is volatized. The obtained xerogel was ground to powder, calcined in a high temperature box furnace at 500°C for 6 hours, cooled and ground again, calcined at 1200°C for 1 hour, cooled to the room temperature to obtain the titanate luminescent material having the formula of Ca_{0.995}Ti_{0.85}O₃:Pr_{0.005,}Ga_{0.15}@TiO₂@Pt_{5×10}-3.

### Example 4

Preparation of Ca_{0.99}Ti_{0.92}O₃:Pr_{0.01}Ga_{0.08}@TiO₂@Pd_{1×10}-5 using sol-gel method.

Preparation of TiO2@Pd_{1×10}-5: 0.22 mg of palladium chloride (PdCl₂·H₂O) was weighed and dissolved into deionized water to prepare 20mL of palladium chloride solution having a concentration of S×10⁻⁵mol/L. 10mL of triethanolamine titanium isopropoxide with a concentration of 4.3 mol/L was pipette and diluted with isopropyl alcohol to 2.5mol/L. 5mL of S×10⁻⁵mol/L of palladium chloride solution and 10mL of 2.5mol/L of isopropyl alcohol solution of titanium isopropoxide triethanolamine were pipette and well mixed to form a mixed solution. 5mL of dimethylformamide was added to the mixed solution, stirred at a room temperature for 15 minutes, the heated and stirred at 140 °C using a reflux device. When the color of solution turned light brown through colorless and turned dark brown, the heating was stopped, the system was cooled to the room temperature, and TiO₂@Pd_{1×10}-5 colloid was obtained. The colloid was then centrifuged, rinsed with ethanol and dried, and TiO₂@Pd_{1×10}-5 solid was obtained.

Preparation of titanate luminescent material of Ca_{0.99}Ti_{0.920}O₃:Pr_{0.01},Ga_{0.08}@TiO₂@Pd_{1×10}-5: 0.4954g of calcium carbonate (Ca₂O₃), 0.0639g of gallium carbonate (Ga₂(CO₃)₃), and 0.0115g of praseodymium carbonate (Pr₂(CO₃)₃) were weighed and placed in a vessel, 5mL of dilute nitric acid was dissolved by heating in the vessel, and 50mL of mixed solution of ethanol and water with a volume ratio of 3: 1 was added after cooling. 5.3793g of citric acid and 8.25g of polyethylene glycol having a relative molecular weight of 2000 were added to the vessel in an 65°C water bath with stirring, the reaction system was stirred for 6 hour to obtain a transparent sol. 0.3858g of TiO₂@Pd_{1×10}-5 powder was added, stirred for 4 hours to obtain a precursor sol. The precursor sol was then dried for 8 hours at a temperature of 100°C, a xerogel was obtained after the solvent is volatized. The obtained xerogel was ground to powder, calcined in a high temperature box furnace at 700°C for 1 hour, cooled and ground again, calcined at 900°C for 10 hours, cooled to the room temperature to obtain the titanate luminescent material having the formula of Ca_{0.99}Ti₀.₉₂O₃:Pr_{0.01},Ga_{0.08@}TiO₂@Pd_{1×10}-5.

### Example 5

Preparation of Ca_{0.996}Ti_{0.80}O₃:Pr_{0.004},Al_{0.10},Ga_{0.10}@TiO₂@Cu_{1×10}-4 using sol-gel method.

Preparation of TiO₂@Cu_{1×10}-4: 1.6 mg of copper nitrate (Cu(NO₃)₂) was weighed and dissolved into 16mL of ethanol to prepare 20mL of copper nitrate solution having a concentration of 4×10⁻⁴mol/L. 5mL of triethanolamine titanium isopropoxide with a concentration of 4.3 mol/L was pipette and diluted with isopropyl alcohol to 2mol/L. 2mL of 4×10⁻⁴mol/L of copper nitrate solution and 4mL of 2mol/L of isopropyl alcohol solution of titanium isopropoxide triethanolamine were pipette and well mixed to form a mixed solution. 24mL of dimethylformamide was added to the mixed solution, stirred at a room temperature for 15 minutes, the heated and stirred at 140 °C using a reflux device. When the color of solution turned light brown through colorless and turned dark brown, the heating was stopped, the system was cooled to the room temperature, and TiO₂@Cu_{1×10}-4 colloid was obtained. The colloid was then centrifuged, rinsed with ethanol and dried, and TiO₂@Cu_{1×10}-4 solid was obtained, where y=1×10⁻⁴

Preparation of titanate luminescent material of Ca_{0.996}Ti_{0.80}O3:Pr_{0.004},Al_{0.10},Ga_{0.10}@TiO₂@Cu_{1×10}-4: 0.5527g of calcium chloride (CaCl₂), 0.0666g of aluminum chloride (AlCl₃), 0.0880g of praseodymium chloride (PrCl₃), and 0.0049g of praseodymium chloride (PrCl₃) were weighed and placed in a vessel, 50mL of mixed solution of ethanol and water with a volume ratio of 4:1 was added. 6.9163g of citric acid and 2.5g of polyethylene glycol having a relative molecular weight of 20000 were added to the vessel in a 60°C water bath with stirring, the reaction system was stirred for 3 hours to obtain a transparent sol. 0.3514g of TiO₂@Cu_{1×10}-4 powder was added, stirred for 12 hours to obtain a precursor sol. The precursor sol was then dried for 15 hours at a temperature of 80°C, a xerogel was obtained after the solvent is volatized. The obtained xerogel was ground to powder, calcined in a high temperature box furnace at 500°C for 3 hours, cooled and ground again, calcined at 700°C for 5 hours, cooled to the room temperature to obtain the titanate luminescent material having the formula of Ca_{0.996}Ti₀.₈₀O₃:Pr_{0.004},Al_{0.10},Ga_{0.10}@TiO₂@Cu_{1×10}-4.

### Example 6

Preparation of Ca_{0.994}Ti_{0.88}O₃:Pr_{0.006},Al_{0.12}@TiO₂@(Ag_{0.5}(Ag_{0.5}/Au_{0.5})_{1.25×10}-4 using sol-gel method.

Preparation of TiO₂@(Ag₀.₅/Au_{0.5})_{1.25×10}-4: 6.2 mg of chloroauric acid (AuCl₃•HCl•4H₂O) and 2.5mg of AgNO₃ were weighed and dissolved into 28mL of deionized water to prepare 30mL of mixed solution of chloroauric acid and silver nitrate having a total concentration of 5×10⁻³mol/L (the concentrations of chloroauric acid and silver nitrate are 0.5×10⁻³mol/L, respectively). 2mL of triethanolamine titanium isopropoxide with a concentration of 4.3 mol/L was pipette and diluted with isopropyl alcohol to 0.4mol/L. 5mL of 1×10⁻³mol/L of mixed solution of chloroauric acid and silver nitrate and 10mL of 0.4mol/L of isopropyl alcohol solution of titanium isopropoxide triethanolamine were pipette and well mixed to form a mixed solution. 10mL of dimethylformamide was added to the mixed solution, stirred at a room temperature for 15 minutes, the heated and stirred at 140 °C using a reflux device. When the color of solution turned light brown through colorless and turned dark brown, the heating was stopped, the system was cooled to the room temperature, and TiO₂@(Ag_{0.5}/Au_{0.5})_{1.25×10}-4 colloid was obtained. The colloid was then centrifuged, rinsed with ethanol and dried, and TiO₂@(Ag_{0.5}/Au_{0.5})_{1.25×10-}4 solid was obtained.

Preparation of titanate luminescent material of Ca_{0.994}Ti_{0.88}O₃:Pr₀₀₆,Al_{0.12}@TiO₂@(Ag_{0.5}/Au_{0.5})₁._{25×10}-4: 0.8155g of calcium nitrate (Ca(NO₃)₂), 0.1278g of aluminum nitrate (Al(NO₃)₃), and 0.0098g of praseodymium nitrate (Pr(NO₃)₃) were weighed and placed in a vessel, 50mL of mixed solution of ethanol and water with a volume ratio of 3: 1 was added. 9.2217g of citric acid and 5.5g of polyethylene glycol having a relative molecular weight of 4000 were added to the vessel in an 70°C water bath with stirring, the reaction system was stirred for 4 hours to obtain a transparent sol. 0.3690g of TiO₂@(Ag_{0.5}/Au_{0.5})_{1.15×10}-4 powder was added, stirred for 6 hours to obtain a precursor sol. The precursor sol was then dried for 12 hours at a temperature of 100°C, a xerogel was obtained after the solvent is volatized. The obtained xerogel was ground to powder, calcined in a high temperature box furnace at 600°C for 1 hour, cooled and ground again, calcined at 800°C for 8 hours, cooled to the room temperature to obtain the titanate luminescent material having the formula of Ca_{0.994}Ti_{0.88}O₃:Pr_{0.006,}Al_{0.12}@CTiO₂@(Ag_{0.5}/Au_{0.5})_{1.25×10}-4.

Although the present invention has been described with reference to the embodiments thereof and the best modes for carrying out the present invention, it is apparent to those skilled in the art that a variety of modifications and changes may be made without departing from the scope of the present invention, which is intended to be defined by the appended claims.

## Claims

1. A titanate luminescent material having the following chemical formula:
Ca₁₋ₓTi_{1-y}O₃:Prₓ,R_{y}@TiO₂@M_{z};
wherein @ represents coating, Pr and R are doped in Ca₁₋ₓTi_{1-y}O₃, M forms a core of the titanate luminescent material, TiO₂ forms an intermediate shell of the titanate luminescent material; Ca₁₋ₓTi_{1-y}O₃:Prₓ,R_{y}, forms an outer shell of the titanate luminescent material; R is at least one selected from the group consisting of Al and Ga, and M is at least one nanoparticle selected from the group consisting of Ag, Au, Pt, Pd and Cu; 0<x≤0.01, 0<y≤0.20, z is a molar ratio between M and Ti in the titanate luminescent material, 0<z≤1×10⁻².

2. The titanate luminescent material according to claim 1, wherein 0.001≤x≤0.005.

3. The titanate luminescent material according to claim 1, wherein 0.02≤y≤0.15.

4. The titanate luminescent material according to claim 1, wherein 1×10⁻⁵≤y≤5×10⁻³.

5. A method of preparing a titanate luminescent material, comprising the following steps:
mixing and reacting a salt solution of the metal M, an organic titanium compound, and a first reducing agent to obtain a colloid of TiO₂@M_{z} having a core-shell structure, wherein the salt solution of the metal M and the organic titanium compound are mixed according to a mole ratio z of M to titanium, 0<z≤1×10⁻², M is at least one selected from the group consisting of Ag, Au, Pt, Pd and Cu, @ represents coating, M forms a core of the core-shell structure, TiO₂ forms an intermediate shell of the core-shell structure;
centrifuging the colloid to obtain a solid phase, washing the solid phase, drying the solid phase to obtain the TiO₂@M_{z} solid;
preparing an ethanol aqueous solution containing Ca²⁺, R³⁺, and Pr³⁺ according to mole ratio of Ca²⁺, R³⁺, and Pr³⁺ of (1-x):x:y; wherein R³⁺ is at least one selected from the group consisting of Al³⁺ and Ga³⁺, 0<x≤0.01; 0<y≤0.20;
adding a second reducing agent and a surfactant to the ethanol aqueous solution containing Ca²⁺, R³⁺, and Pr³⁺, stirring at 60°C to 80°C for 2 to 6 hours to obtain a sol;
adding the TiO₂@M_{z} solid to the sol, stirring at 60°C to 80°C for 2 to 12 hours to obtain a precursor solution, wherein a mole ratio of the TiO₂@M_{z} to Ca²⁺ in the sol is (2-y):(1-x); drying the precursor solution to obtain a gel; and
grinding the gel, preheating the gel at 500°C to 700°C for 1 to 6 hours, grinding the gel again after cooling, calcining the gel at 700°C to 1200°C for 1 to 10 hours to obtain a titanate luminescent material having the following chemical formula: Ca₁₋ₓTi_{1-y}O₃:Prₓ,R_{y}@TiO₂@M_{z}, wherein Pr and R are doped in Ca₁₋ₓTi_{1-y}O₃, M forms a core of the titanate luminescent material, TiO₂ forms an intermediate shell of the titanate luminescent material; Ca₁₋ₓTi₁₋yO₃:Prₓ,R_{y}, forms an outer shell of the titanate luminescent material.

6. The method according to claim 5, wherein the salt solution of the metal M is at least one solution selected from the group consisting of HAuCl₄, AgNO₃, H₂PtCl₆, PdCl₂, and Cu(NO₃)₂ having a concentration of 5×10⁻⁵mol/L to 5×10⁻³mol/L.

7. The method according to claim 5, wherein the organic titanium compound is titanium isopropoxide triethanolamine; the first reducing agent is dimethyl formamide, the first reducing agent is 20% to 80% by volume of a total volume of the first reducing agent, the salt solution of the metal M, and the organic titanium compound.

8. The method according to claim 5, wherein the ethanol aqueous solution containing Ca²⁺, R³⁺, and Pr³⁺ is an ethanol aqueous solution containing acetate, hydrochloride or nitrate or Ca²⁺, R³⁺, and Pr³⁺, and a volume ratio of ethanol to water in the ethanol aqueous solution ranges from 3:1 to 8:1.

9. The method according to claim 5, wherein the second reducing agent is citric acid, and a mole ratio of the second reducing agent to a sum of the Ca²⁺, R³⁺, and Pr³⁺ ranges from 1:1 to 5:1.

10. The method according to claim 5, wherein the surfactant is a polyethylene glycol having a molecular weight of 100 to 20000.

## Patentansprüche

1. Titanat-Lumineszenzmaterial mit der folgenden chemischen Formel:
Ca₁₋ₓTi_{1-y}O₃:Prₓ,R_{y}@TiO₂@M_{z};
wobei @ eine Beschichtung darstellt, Pr und R in Ca₁₋ₓTi_{1-y}O₃ dotiert sind, M einen Kern des Titanat-Lumineszenzmaterials bildet, TiO₂ eine Zwischenschale des Titanat-Lumineszenzmaterials bildet; Ca₁₋ₓTi₁₋yO₃:Prₓ,R_{y} eine äußere Schale des Titanat-Lumineszenzmaterial bildet; R mindestens ein aus der Gruppe bestehend aus Al und Ga ausgewähltes Element ist, und M ist mindestens ein aus der Gruppe bestehend aus Ag, Au, Pt, Pd und Cu ausgewähltes Nanopartikel ist; wobei 0 < x ≤ 0,01, 0 < y ≤ 0,20, z ein Molverhältnis zwischen M und Ti im Titanat-Lumineszenzmaterial und 0 < z ≤ 1 ×10⁻² ist.

2. Titanat-Lumineszenzmaterial nach Anspruch 1, wobei 0,001 ≤ x ≤ 0,005 ist.

3. Titanat-Lumineszenzmaterial nach Anspruch 1, wobei 0,02 ≤ y ≤ 0,15 ist.

4. Titanat-Lumineszenzmaterial nach Anspruch 1, wobei 1×10⁻⁵ ≤y ≤5×10⁻³ ist.

5. Verfahren zum Herstellen eines Titanat-Lumineszenzmaterials mit den Schritten:
Mischen und Umsetzen einer Salzlösung des Metalls M, einer organischen Titanverbindung und eines ersten Reduktionsmittels, um ein Kolloid von TiO₂@M_{z} mit einer Kern-Schale-Struktur zu erhalten, wobei die Salzlösung des Metalls M und die organische Titanverbindung gemäß einem Molverhältnis z von M zu Titan von 0 < z ≤1 ×10⁻² gemischt werden, wobei M mindestens ein aus der Gruppe bestehend aus Ag, Au, Pt, Pd und Cu ausgewähltes Element ist, @ eine Beschichtung darstellt, M einen Kern der Kern-Schale-Struktur bildet und TiO₂ eine Zwischenschale der Kern-Schale-Struktur bildet;
Zentrifugieren des Kolloids zum Erzeugen einer festen Phase, Waschen der festen Phase und Trocknen der festen Phase, um einen TiO_{2@}Mz-Feststoff zu erhalten;
Herstellen einer wässrigen Ethanollösung, die Ca²⁺, R³⁺ und Pr³⁺ gemäß einem Molverhältnis von Ca²⁺, R³⁺ und Pr³⁺ von (1-x):x:y enthält; wobei R³⁺ mindestens eine aus der Gruppe bestehend aus Al³⁺ und Ga³⁺ ausgewählte Komponente ist, und wobei 0 < x ≤ 0,01; 0 < y ≤0,20 ist;
Zugeben eines zweiten Reduktionsmittels und eines oberflächenaktiven Stoffs zu der wässrigen Ethanollösung, die Ca²⁺ , R³⁺ und Pr³⁺ enthält, Rühren bei 60°C bis 80°C für 2 bis 6 Stunden, um ein Sol zu erhalten;
Zugeben des TiO₂@M_{z}-Feststoffs zu dem Sol, Rühren bei 60°C bis 80°C für 2 bis 12 Stunden, um eine Vorläuferlösung zu erhalten, wobei ein Molverhältnis von TiO₂@M_{z} zu Ca²⁺ in dem Sol (2-y):(1-x) beträgt;
Trocknen der Vorläuferlösung, um ein Gel zu erhalten; und
Mahlen des Gels, Vorwärmen des Gels bei 500°C bis 700°C für 1 bis 6 Stunden, erneutes Mahlen des Gels nach einem Abkühlvorgang, Kalzinieren des Gels bei 700°C bis 1200°C für 1 bis 10 Stunden, um ein Titanat-Lumineszenzmaterial mit der chemischen Formel Ca₁₋ₓTi₁₋yO₃:Prₓ,Ry@TiO₂@M_{z} zu erhalten, wobei Pr und R in Ca₁₋ₓTi_{1-y}O₃ dotiert sind, M einen Kern des Titanat-Lumineszenzmaterials bildet, TiO₂ eine Zwischenschale des Titanat-Lumineszenzmaterials bildet; und Ca₁₋ₓTi₁₋yO₃:Prₓ,R_{y} eine äußere Schale des Titanat-Lumineszenzmaterial bildet.

6. Verfahren nach Anspruch 5, wobei die Salzlösung des Metalls M mindestens eine aus der Gruppe bestehend aus HAuCl₄, AgNO3, H₂PtCl₆, PdCl₂ und Cu(NO₃)₂ ausgewählte Lösung mit einer Konzentration von 5×10⁻⁵ Mol/l bis 5×10⁻³ Mol/l ist.

7. Verfahren nach Anspruch 5, wobei die organische Titanverbindung Titanisopropoxidtriethanolamin ist, das erste Reduktionsmittel Dimethylformamid ist, und der Anteil des ersten Reduktionsmittels 20 Vol.-% bis 80 Vol.-% bezogen auf das Gesamtvolumen des ersten Reduktionsmittels, der Salzlösung des Metalls M und der organischen Titanverbindung beträgt.

8. Verfahren nach Anspruch 5, wobei die wässrige Ethanollösung, die Ca²⁺, R³⁺ und Pr³⁺ enthält, eine wässrige Ethanollösung ist, die Acetat, Hydrochlorid oder Nitrat oder Ca²⁺, R³⁺ und Pr³⁺ enthält, und wobei ein Volumenverhältnis von Ethanol zu Wasser in der wässrigen Ethanollösung im Bereich von 3:1 bis 8:1 liegt.

9. Verfahren nach Anspruch 5, wobei das zweite Reduktionsmittel Zitronensäure ist, und wobei ein Molverhältnis des zweiten Reduktionsmittels zur Summe aus Ca²⁺, R³⁺ und Pr³⁺ im Bereich von 1:1 bis 5:1 liegt.

10. Verfahren nach Anspruch 5, wobei der oberflächenaktive Stoff ein Polyethylenglykol mit einem Molekulargewicht von 100 bis 20000 ist.

## Revendications

1. Matériau luminescent de titanate ayant la formule chimique suivante :
Ca₁₋ₓTi_{1-y}O₃:Prₓ,R_{y}@TiO₂@M_{z};
dans lequel @ représente un revêtement, Pr et R sont dopés en Ca₁₋ₓTi_{1-y}O₃, M forme un noyau de la matière luminescente de titanate, TiO₂ forme une enveloppe intermédiaire du matériau luminescent de titanate ; Ca₁₋ₓTi_{1-y}O₃:Prₓ,R_{y}, forme une enveloppe extérieure du matériau luminescent de titanate ; R est au moins un élément choisi dans le groupe constitué par Al et Ga, et M est au moins une nanoparticule choisie dans le groupe constitué par Ag, Au, Pt, Pd et Cu ; 0<x≤0,01, 0<y≤0,20, z est un rapport molaire entre M et Ti dans le matériau luminescent de titanate, 0<z≤1×10⁻².

2. Matériau luminescent de titanate selon la revendication 1, dans lequel 0,001≤x≤0,005.

3. Matériau luminescent de titanate selon la revendication 1, dans lequel 0,02≤y≤0,15.

4. Matériau luminescent de titanate selon la revendication 1, dans lequel 1×10⁻⁵≤y≤5×10⁻³.

5. Procédé de préparation d'un matériau luminescent de titanate, comprenant les étapes suivantes :
mélanger et faire réagir une solution de sel du métal M, un composé organique de titane, et un premier agent réducteur pour obtenir un colloïde de TiO₂-@M_{z} ayant une structure noyau-enveloppe, dans lequel la solution de sel du métal M et le composé organique de titane sont mélangés selon un rapport molaire z de M au titane, 0<z≤1×10⁻², M est au moins un élément choisi dans le groupe constitué par Ag, Au, Pt, Pd et Cu, @ représente un revêtement, M forme un noyau de la structure noyau-enveloppe, TiO₂ forme une enveloppe intermédiaire de la structure noyau-enveloppe ;
centrifuger le colloïde pour obtenir une phase solide, laver la phase solide, sécher la phase solide pour obtenir le solide de TiO₂@M_{z} ;
préparer une solution aqueuse d'éthanol contenant du Ca²⁺, R³⁺, et Pr³⁺ en fonction d'un rapport molaire de Ca²⁺, R³⁺, et Pr³⁺ de (1-x):x:y ; dans lequel R³⁺ est au moins un élément choisi dans le groupe constitué par Al³⁺ et Ga³⁺, 0<x≤0,01 ; 0<y≤0,20 ;
ajouter un deuxième agent réducteur et un agent tensio-actif à la solution aqueuse d'éthanol contenant du Ca²⁺, R³⁺, et Pr³⁺, agiter de 60°C à 80°C pendant 2 à 6 heures pour obtenir un sol ;
ajouter le solide de TiO₂@M_{z} au sol, agiter de 60°C à 80°C pendant 2 à 12 heures pour obtenir une solution de précurseur, dans lequel un rapport molaire de TiO₂@M_{z} au Ca²⁺ dans le sol est de (2-y):(1-x) ; sécher la solution de précurseur pour obtenir un gel ; et
broyer le gel, le préchauffer le gel de 500°C à 700°C pendant 1 à 6 heures, broyer à nouveau le gel après refroidissement, calciner le gel de 700°C à 1200°C pendant 1 à 10 heures pour obtenir un matériau luminescent de titanate ayant la formule chimique suivante : Ca₁₋ₓTi₁₋yO₃:Prₓ,R_{y}@TiO₂@M_{z}, dans lequel Pr et R sont dopés en Ca_{1-y}Ti_{1-y}O₃, M forme un noyau du matériau luminescent de titanate, TiO₂ forme une enveloppe intermédiaire du matériau luminescent de titanate ; Ca₁₋xTi_{1-y}O₃:Prₓ,R_{y}, forme une enveloppe extérieure du matériau luminescent de titanate.

6. Procédé selon la revendication 5, dans lequel la solution de sel du métal M est au moins une solution choisie dans le groupe constitué par HAuCl₄, AgNO₃, H₂PtCl₆, PdCl₂ et Cu(NO₃)₂ ayant une concentration de 5x10⁻⁵ mol/L à 5×10⁻³ mol/L.

7. Procédé selon la revendication 5, dans lequel le composé organique de titane est la triéthanolamine d'isopropoxyde de titane ; le premier agent réducteur est le diméthylformamide, le premier agent réducteur est de 20% à 80% en volume d'un volume total du premier agent réducteur, la solution de sel du métal M, et le composé organique de titane.

8. Procédé selon la revendication 5, dans lequel la solution aqueuse d'éthanol contenant du Ca²⁺, R³⁺, et Pr³⁺ est une solution aqueuse d'éthanol contenant de l'acétate, du chlorhydrate ou du nitrate ou du Ca²⁺, R³⁺, et Pr³⁺, et un rapport en volume de l'éthanol à l'eau dans la solution aqueuse d'éthanol est compris entre 3:1 et 8:1.

9. Procédé selon la revendication 5, dans lequel le deuxième agent réducteur est l'acide citrique, et un rapport molaire du deuxième agent réducteur à une somme des Ca²⁺, R³⁺, et Pr³⁺ est compris entre 1:1 et 5:1.

10. Procédé selon la revendication 5, dans lequel l'agent tensio-actif est un polyéthylèneglycol ayant un poids moléculaire de 100 à 20000.
